# EUROPEAN PATENT APPLICATION

(11) **EP 1 919 040 A2**
(43) Date of publication of application: **07.05.2008**
(21) Application number: 07011821.1
(22) Date of filing: 15.06.2007
(51) Int. Cl.: H01R 24/00, H04L 12/46

(54) **Method and system for automatic twisted-pair CAT cable configuration**

(30) Priority: 31.10.2006 US 863701 P; 23.02.2007 US 678363
(71) Applicant: Broadcom Corporation, Irvine, CA 92617 (US)
(72) Inventor: Sefidvash, Khorvash, Cardiff by the Sea, CA 95129 (US)
(74) Representative: Jehle, Volker Armin

(57) **Abstract**

Methods and systems for automatic twisted pair cable configuration are disclosed and may comprise configuring a single network interface to handle processing of signals communicated over differently coupled twisted pair cable configurations. One or more switching devices, which may comprise multiplexers or configurable switches, may be electronically or manually configured to couple a single network interface to one or more corresponding conductors associated with the twisted pair cable configurations. The configuration may enable at least a portion of the one or more switching devices and disable other portions of the switching devices. The single network interface may handle processing of data rates ranging from 1BaseT to multi-gigabit speeds. The twisted pair cable configurations may comprise the following categories: CAT 3, CAT 4, CAT 5, CAT 5E, CAT 6, CAT 6A, CAT 7 and CAT 7A.

## Description

### CROSS-REFERENCE TO RELATED APPLICATIONS/INCORPORATION BY REFERENCE

This application makes reference to and claims priority to United States Provisional Application Serial No. 60/863,701 filed on October 31, 2006, entitled "METHOD AND SYSTEM FOR AUTOMATIC CAT CABLE CONFIGURATION," which is incorporated herein by reference in its entirety.

### FEDERALLY SPONSORED RESEARCH OR DEVELOPMENT

[Not Applicable]

### [MICROFICHE/COPYRIGHT REFERENCE]

[Not Applicable]

### FIELD OF THE INVENTION

Certain embodiments of the invention relate to cable configuration. More specifically, certain embodiments of the invention relate to a method and system for automatic CAT cable configuration.

### BACKGROUND OF THE INVENTION

As the number of devices connected to data networks increase and higher data rates are required, there is a growing need for new transmission technologies enabling higher transmission rates over existing copper cabling infrastructures. Various efforts exist in this regard, including technologies that enable transmission rates that may even exceed Gigabits-per-second (Gbps) data rates over existing cabling. For example, the IEEE 802.3 standard defines the (Medium Access Control) MAC interface and physical layer (PHY) for Ethernet connections at 10 Mbps, 100 Mbps, 1 Gbps, and 10 Gbps data rates over twisted-pair copper cabling 100 m in length. With each 10x rate increase more sophisticated signal processing is required to maintain the 100 m standard cable range. However, connections longer than 100 m may require either the use of fiber or the placement of Ethernet switches, hubs, and/or repeaters, at mid-points in the connection to keep all cables less than 100 m in length.

Other efforts include the development of a standard for 10 Gigabits-per-second (Gbps) Ethernet transmission over twisted-pair cabling (10GBASE-T). For example, the emerging 10GBASE-T PHY specification is intended to enable 10 Gbps connections over twisted-pair cabling at distances of up to 182 feet for existing cabling, and at distances of up to 330 feet for new cabling, for example. To achieve full-duplex transmission at 10 Gbps over four-pair twisted-pair copper cabling, elaborate digital signal processing techniques are needed to remove or reduce the effects of severe frequency-dependent signal attenuation, signal reflections, near-end and far-end crosstalk between the four pairs; and external signals coupled into the four pairs either from adjacent transmission links or other external noise sources. Moreover, new cabling specifications are being developed to diminish susceptibility to external electromagnetic interferences.

Twisted pair cables are generally divided into several categories such as CAT 5, CAT 5e, CAT 6, etc... , and are typically used in structured cabling for computer networks such as Ethernet, but can also be used to carry many other signals such as basic voice services, token ring, and ATM. The categories distinguish between cables of differing design and performance. For example, CAT 5 cable included four twisted pairs in a single jacket for use at up to 100 MHZ rates, whereas CAT 6 cable includes four twisted pairs (generally thicker wire) for use at up to 250 MHz rates.

As new cabling technologies and standards emerge, there is a proportionate increase in corresponding interfaces required to exploit these new technologies and standards. The very nature of some of these technologies and standards make it challenging to mix and match the various cabling interfaces.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for automatic CAT cable configuration, substantially as shown in and/or described in connection with at least one of the figures, as set forth more completely in the claims.
According to an aspect of the invention, a method for interfacing devices to a network is provided, the method comprising:
configuring a single network interface to handle processing of signals communicated over differently coupled CAT cable configurations.
   Advantageously, the method further comprises electronically configuring one or more switching devices to couple said single network interface to one or more corresponding conductors associated with said CAT cable configurations.
   Advantageously, said one or more switching devices comprises one or more multiplexers.
   Advantageously, the method further comprises enabling at least a portion of one or more switching devices during said configuring.
   Advantageously, the method further comprises disabling at least a portion of one or more switching devices during said configuring.
   Advantageously, the method further comprises manually configuring one or more switches to couple said single network interface to one or more corresponding conductors associated with said CAT cable configuration.
   Advantageously, the method further comprises enabling at least a portion of said one or more switches during said manual configuration.
   Advantageously, the method further comprises disabling at least a portion of said one or more switches during said manual configuration.
   Advantageously, said single network interface handles processing of data rates ranging from 1 BaseT to multi-gigabit speeds.
   Advantageously, said category (CAT) cable configurations comprise : CAT 3, CAT 4, CAT 5, CAT 5E, CAT 6, CAT 6A, CAT 7 and CAT 7A.
   According to an aspect of the invention, a system is provided for interfacing devices to a network, the system comprising:
   one or more circuits for configuring a single network interface to handle processing of signals communicated over differently coupled CAT cable configurations.
   Advantageously, said one or more circuits electronically configures one or more switching devices to couple said single network interface to one or more corresponding conductors associated with said CAT cable configurations
   Advantageously, said one or more switching devices comprises one or more multiplexers.
   Advantageously, said one or more circuits enables at least a portion of one or more switching devices during said configuring.
   Advantageously, said one or more circuits disables at least a portion of one or more switching devices during said configuring.
   Advantageously, one or more switches is manually configured to couple said single network interface to one or more corresponding conductors associated with said CAT cable configuration.
   Advantageously, at least a portion of said one or more switches is enabled during said manual configuration.
   Advantageously, at least a portion of said one or more switches is disabled during said manual configuration.
   Advantageously, said single network interface handles processing of data rates ranging from 1 BaseT to multi-gigabit speeds.
   Advantageously, said CAT cable configurations comprise : CAT 3, CAT 4, CAT 5, CAT 5E, CAT 6, CAT 6A, CAT 7 and CAT 7A.
   According to an aspect of the invention, a method is provided for interfacing a device to a network, the method comprising configuring a single connector to accept a plurality of different category (CAT) wiring types to handle a plurality of data rates.
   Advantageously, said single connector is an RJ45 connector.
   Advantageously, said CAT cabling configurations comprise : CAT 3, CAT 4, CAT 5, CAT 5E, CAT 6, CAT 6A, CAT 7 and CAT 7A.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram of a computer network illustrating the use of network cables, in connection with an embodiment of the invention.

FIG. 1 B is a block diagram illustrating a Category 3 to 6A connector interface in connection with an embodiment of the invention.

FIG. 2 is a block diagram illustrating a Category 6 to 7 connector interface in connection with an embodiment of the invention.

FIG. 3 is a block diagram illustrating a Category 7 to 7A connector interface in connection with an embodiment of the invention.

FIG. 4 is a block diagram illustrating a direct connection category independent interconnection in accordance with an embodiment of the invention.

FIG. 5 is a block diagram illustrating a multiplexer configured category independent interconnection in accordance with an embodiment of the invention.

FIG. 6 is a block diagram illustrating a switch configured category independent interconnection in accordance with an embodiment of the invention.

### DETAILED DESCRIPTION OF THE INVENTION

Certain aspects of the invention may be found in a method and system for automatic CAT cable configuration. Aspects of the invention may comprise configuring a single network interface to handle processing of signals communicated over differently coupled CAT cable configurations. One or more switching devices, which may comprise multiplexers or configurable switches, may be electronically or manually configured to couple a single network interface to one or more corresponding conductors associated with the CAT cable configurations. The configuration may enable at least a portion of the one or more switching devices and disable other portions of the switching devices. The single network interface may handle processing of data rates ranging from 1 BaseT to multi-gigabit speeds. The CAT cable configurations may comprise CAT 3, CAT 4, CAT 5, CAT 5E, CAT 6, CAT 6A, CAT 7 and CAT 7A, for example.

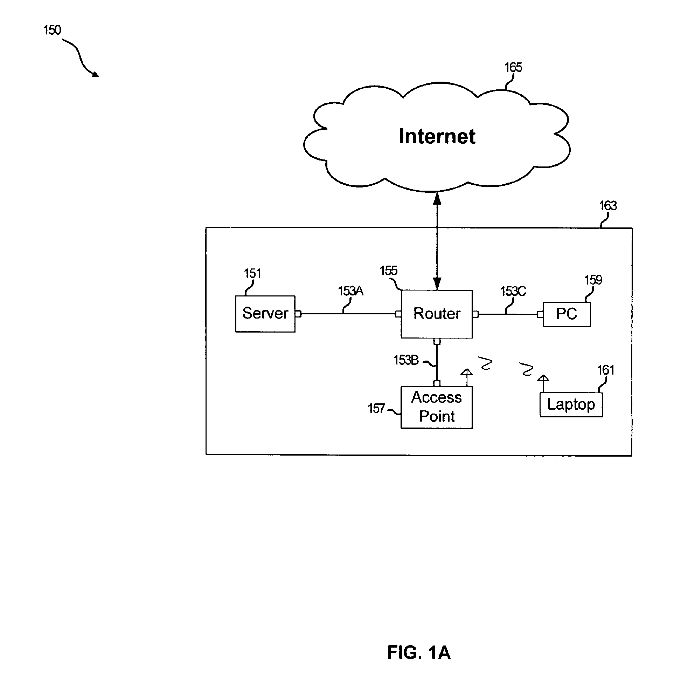

FIG. 1A is a block diagram of a computer network illustrating the use of network cables, in connection with an embodiment of the invention. Referring to FIG. 1A, there is shown an Internet 165 and a local network 163 comprising server 151, cables 153A, 153B and 153C, a router 155, an access point 157, a PC 159 and a laptop 161. The server 151 may comprise suitable circuitry, logic and/or code for operating continuously on a network and serving other systems on the network by performing specific tasks, such as printing or storing data.

The router 155 may comprise suitable circuitry, logic and/or code for forwarding data packets to their appropriate destination, such as to the access point 157, the server 151 and/or the PC 159. The router may serve as the junction point between the local network 163 and the Internet 165. The PC 159 may comprise a computing device, such as a personal computer, which may be enabled to communicate over the local network 163, and may be coupled to the router 155 via the cable 153C. The cables 153A, 153B and 153C may be utilized to couple the components of a network, specifically the server 151, the router 155, the access point 157 and the PC 159. Depending on the requirements of the local network 163, the cables 153A, 153B and 153C may be of different categories, ranging from, for example, CAT 3 to CAT7.

The access point 157 may comprise suitable circuitry, logic and/or code for creating a wireless network that may be accessed by personal computers such as the laptop 161 that may be enabled to communicate over a wireless network. The access point 157 may be coupled to the router 155 via the cable 153B.

In operation, the local network 163 may communicate with the internet via the router 155. The router may also communicate with the components of the local network 163 such as the server 151, the access point 157 and the PC 159 utilizing the cables 153A, 153B and 153C.

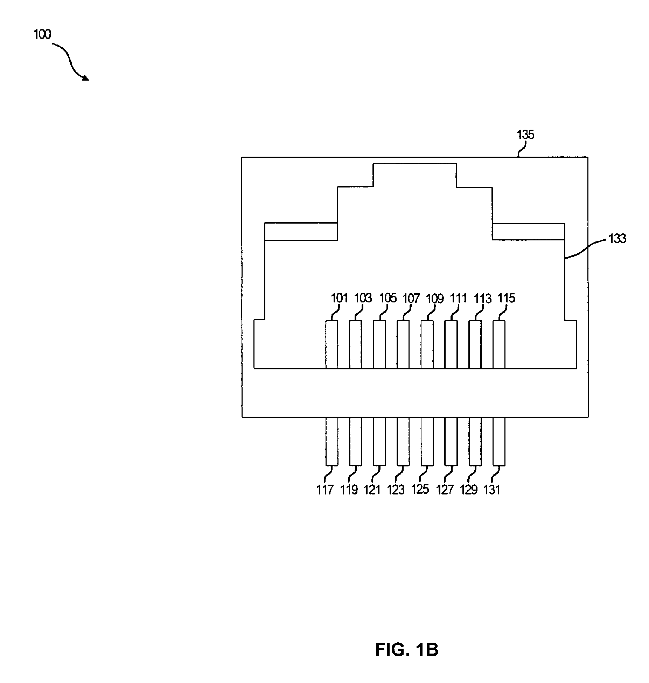

FIG. 1B is a block diagram illustrating a Category 3 to 6A connector interface in connection with an embodiment of the invention. Referring to FIG. 1, there is shown a connector interface 100 comprising a connector body 135, a connector socket 133, socket contact pins 101, 103, 105, 107, 109, 111, 113 and 115 and connector interface pins 117, 119, 121, 123, 125, 127, 129 and 131. The magnetic connector interface 100 may comprise a magnetic modular jack for accepting network cable connectors commonly referred to as RJ45 connectors. The RJ45 connectors may be utilized in networking applications such as 10/100/1000Base-T or 10GBaseT networks. The connector interface 100 with 8 socket contact pins 101, 103, 105, 107, 109, 111, 113 and 115 may be utilized for Category 3 to Category 6A connectors and may represent the female portion of an RJ45 connector.

In operation, an RJ45 Category 3 to Category 6A cable may be inserted into the connector socket 133 of connector interface 100. The connector interface 100 may magnetically couple signals received at the socket contact pins 101, 103, 105, 107, 109, 111, 113 and 115 to the connector interface pins 117, 119, 121, 123, 125, 127, 129 and 131. Data signals may be communicated to and from the RJ45 cable via the connector interface 100.

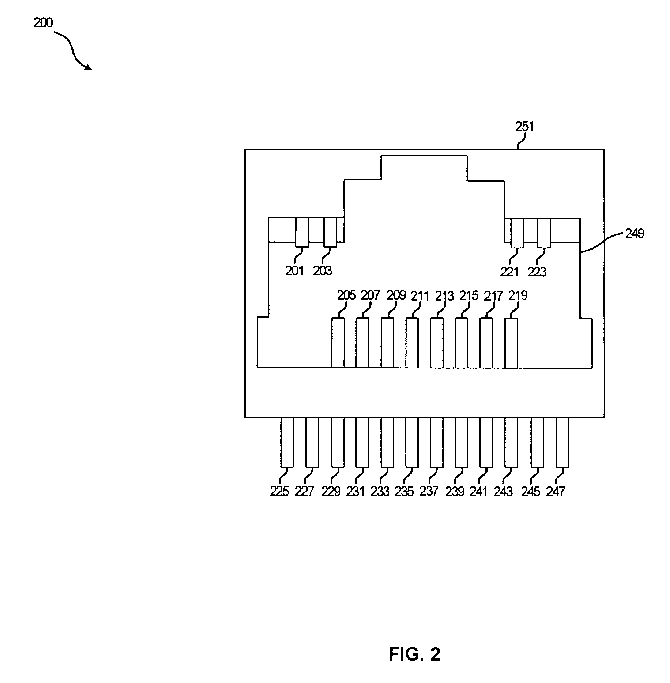

FIG. 2 is a block diagram illustrating a Category 6 to 7 connector interface in connection with an embodiment of the invention. Referring to FIG. 2, there is shown a connector interface 200 comprising a connector body 243, a connector socket 241, socket contact pins 201, 203, 205, 207, 209, 211, 213, 215, 217, 219, 221 and 223, and connector interface pins 225, 227, 229, 231, 233, 235, 237, 239, 241, 243, 245 and 247. The magnetic connector interface 200 may comprise a magnetic modular jack for accepting network cable connectors commonly referred to as RJ45 connectors. The connector interface 200 with 12 socket contact pins 201, 203, 205, 207, 209, 211, 213, 215, 217, 219, 221 and 223 may be utilized for Category 6 to Category 7 connectors and may represent the female portion of an RJ45 connector.

In operation, an RJ45 Category 6 to Category 7 cable may be inserted into the connector socket 241 of connector interface 200. The connector interface 200 may magnetically couple signals received at the socket contact pins 201, 203, 205, 207, 209, 211, 213, 215, 217, 219, 221 and 223 to the connector interface pins 225, 227, 229, 231, 233, 235, 237, 239, 241, 243, 245 and 247. Data signals may be communicated to and from the RJ45 cable via the connector interface 200.

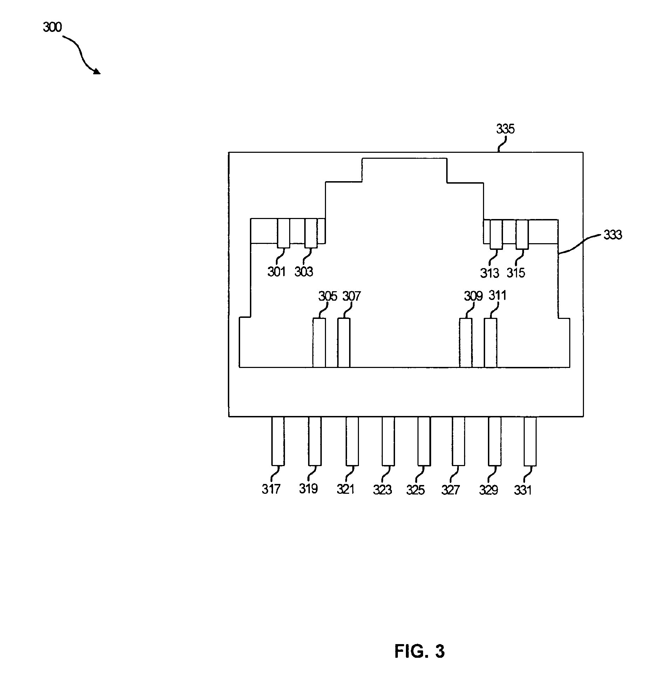

FIG. 3 is a block diagram illustrating a Category 7 to 7A connector interface in connection with an embodiment of the invention. Referring to FIG. 3, there is shown a connector interface 300 comprising a connector body 327, a connector socket 325, socket contact pins 301, 303, 305, 307, 309, 311, 313 and 315, and connector interface pins 317, 319, 321, 323, 325, 327, 329, 331 and 331. The magnetic connector interface 300 may comprise a magnetic modular jack for accepting network cable connectors commonly referred to as RJ45 connectors. The connector interface 200, comprising 8 socket contact pins 301, 303, 305, 307, 309, 311, 313 and 315, may be utilized for Category 7 to Category 7A connectors and may represent the female portion of an RJ45 connector.

In operation, an RJ45 Category 7 to Category 7A cable may be inserted into the connector socket 333 of connector interface 300. The connector interface 300 may magnetically couple signals received at the socket contact pins 301, 303, 305, 307, 309, 311, 313 and 315 to the connector interface pins 317, 319, 321, 323, 325, 327, 329 and 331. Data signals may be communicated to and from the RJ45 cable via the connector interface 300.

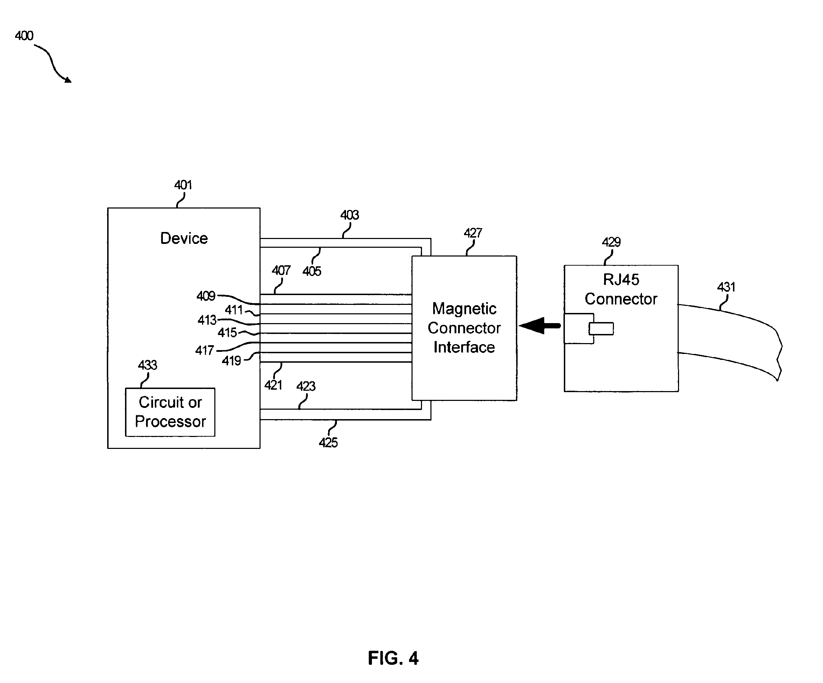

FIG. 4 is a block diagram illustrating a direct connection category independent interconnection in accordance with an embodiment of the invention. Referring to FIG. 4 there is shown an interconnection system 400 comprising a device 401, a magnetic connector interface 427, an RJ45 cable connector 429, a network cable 431, connector interface leads 403, 405, 407, 409, 411, 413, 415, 417, 419, 421, 423 and 425 and a circuit or processor 433. The device 401 may comprise suitable logic, circuitry, and/or code that may be utilized to transmit signals to and/or receive signals from the magnetic connector interface 427. The magnetic connector interface 427 may comprise a magnetic modular jack for accepting network cable connectors commonly referred to as RJ45 connectors. The RJ45 cable connector 429 may comprise an 8 pin plug that may be utilized to connect network cable 431 to the magnetic connector interface 427. The magnetic connector interface 427 may represent the female portion of an RJ45 connector, whereas the RJ45 cable connector 429 may represent the male portion of the RJ45 connector. The RJ45 connector may be a Category 3 to Category 6A, a Category 6 to 7, a Category 7 to Category 7A or similar type of plug. The network cable 431 may comprise suitable wiring for communicating data signals in a 10/100/1000BaseT, 10GBaseT and/or other network. Other communication data rates may also be accommodated.

The circuit or processor 433 may comprise suitable logic, circuitry, and/or code that may enable control and/or data processing operations for the device 401. The processor 433 may test wiring patterns (i.e. known or expected patterns) or may dynamically determine the cable configuration.

In operation, the RJ45 cable connector 429 may be plugged into the magnetic connector interface 427. Signals may be communicated over the network cable 431 to and from the magnetic connector interface 427 and subsequently to and from the device 401 utilizing connector interface leads 403, 405, 407, 409, 411, 413, 415, 417, 419, 421, 423 and 425. The device 401 may be configured to automatically detect which of connector interface leads 403, 405, 407, 409, 411, 413, 415, 417, 419, 421, 423 and 425 may be carrying signals, which may depend on the type of RJ45 connector utilized. In this manner, the device 401 may be compatible with a plurality of connector types. Notwithstanding the interconnection system 400 disclosed in FIG. 4, aspects of the invention need not be so limited.

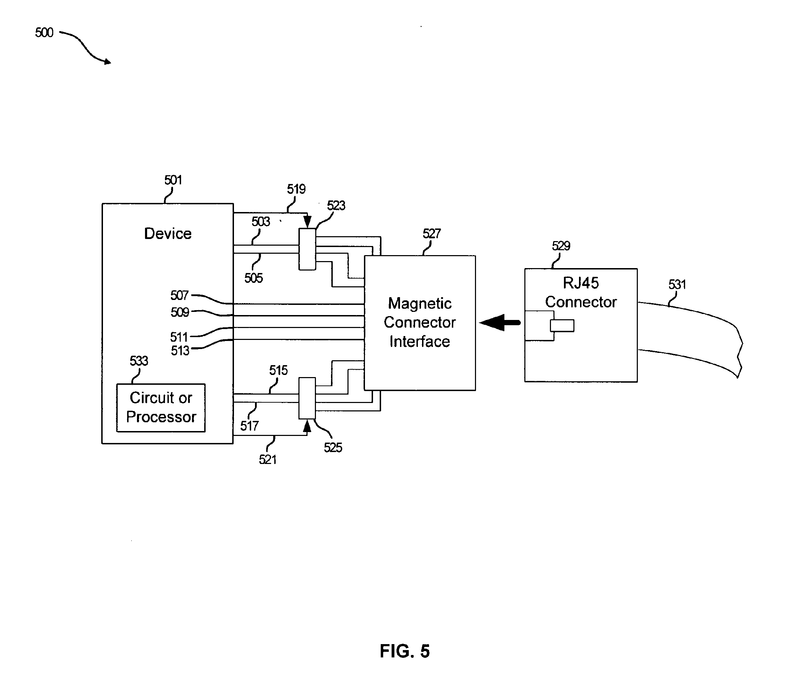

FIG. 5 is a block diagram illustrating a multiplexer configured category independent interconnection in accordance with an embodiment of the invention. Referring to FIG. 5, there is shown an interconnection system 500 comprising a device 501, multiplexers 523 and 525, a magnetic connector interface 527, an RJ45 cable connector 529, a network cable 531, device leads 503, 505, 507, 509, 511, 513, 515, 517, 519 and 521 and a circuit or processor 533. The device 501 may comprise suitable logic, circuitry, and/or code that may be utilized to transmit signals to and/or receive signals from the magnetic connector interface 527, as well as to control the multiplexers 523 and 525. The magnetic connector interface 527 may comprise a magnetic modular jack for accepting network cable connectors commonly referred to as RJ45 connectors. The RJ45 cable connector 529 may comprise an 8 pin plug that may be utilized to connect network cable 531 to the magnetic connector interface 527. The magnetic connector interface 527 may represent the female portion of an RJ45 connector, whereas the RJ45 cable connector 529 may represent the male portion of the RJ45 connector. The RJ45 connector may be a Category 3 to Category 6A, a Category 6 to 7, a Category 7 to Category 7A or similar type of plug. The network cable 531 may comprise suitable wiring for communicating data signals in a 10/100/1000BaseT, 10GBaseT and/or other network. Other communication data rates may also be accommodated.

The circuit or processor 533 may comprise suitable logic, circuitry, and/or code that may enable control and/or data processing operations for the device 501. The processor 533 may test wiring patterns (i.e. known or expected patterns) or may dynamically determine the cable configuration.

In operation, RJ45 cable connector 529 may be plugged into the magnetic connector interface 527. The device 501 may be configured to automatically detect which leads from the magnetic connector interface 527 may be carrying signals and may utilize leads 519 and 521 to enable multiplexers 523 and 525, respectively. The multiplexers 523 and 525 may be utilized to select which pins from the magnetic connector interface 527 may be coupled with the device 501, which may depend on the type of RJ45 connector utilized. In this manner, the device 501 may be compatible with a plurality of connector types. Notwithstanding the interconnection system 500 disclosed in FIG. 5, aspects of the invention need not be so limited.

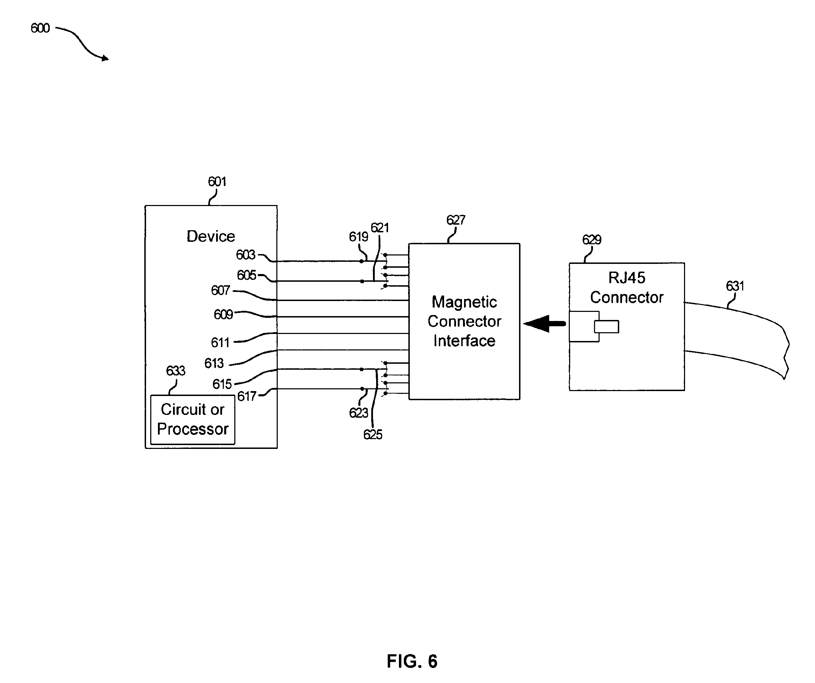

FIG. 6 is a block diagram illustrating a switch configured category independent interconnection in accordance with an embodiment of the invention. Referring to FIG. 6, there is shown an interconnection system 600 comprising a device 601, switches 619, 621, 623 and 625, a magnetic connector interface 627, an RJ45 cable connector 629, a network cable 631, and device leads 603, 605, 607, 609, 611, 613, 615, and 617 and a circuit or processor 633. The device 601 may comprise suitable logic, circuitry, and/or code that may be utilized to transmit signals to and/or receive signals from the magnetic connector interface 627. The magnetic connector interface 627 may comprise a magnetic modular jack for accepting network cable connectors commonly referred to as RJ45 connectors. The RJ45 cable connector 629 may comprise an 8 pin plug that may be utilized to connect network cable 631 to the magnetic connector interface 627. The magnetic connector interface 627 may represent the female portion of an RJ45 connector, whereas the RJ45 cable connector 629 may represent the male portion of the RJ45 connector. The RJ45 connector may be a Category 3 to Category 6A, a Category 6 to 7, a Category 7 to Category 7A or similar type of plug. The network cable 631 may comprise suitable wiring for communicating data signals in a 10/100/1000BaseT, 10GBaseT and/or other network. Other communication data rates may also be accommodated.

The circuit or processor 633 may comprise suitable logic, circuitry, and/or code that may enable control and/or data processing operations for the device 601. The processor 633 may test wiring patterns (i.e. known or expected patterns) or may dynamically determine the cable configuration.

In operation, RJ45 cable connector 629 may be plugged into the magnetic connector interface 627. The switches 619, 621, 623 and 625 may be set to select which pins from the magnetic connector interface 627 may be coupled to the device 601, which may depend on the type of RJ45 connector utilized. The switches may be controlled by the device 601, or may be manually set. In this manner, the device 501 may be compatible with a plurality of connector types. Notwithstanding the interconnection system 600 disclosed in FIG. 6, aspects of the invention need not be so limited.

In an embodiment of the invention, a method and system are described for configuring a single network interface to handle processing of signals communicated over differently coupled CAT cable configurations 100, 200 and/or 300. One or more switching devices, which may comprise multiplexers 523 and 525 or configurable switches 619, 621, 623 and 625, may be electronically or manually configured to couple a single network interface 427, 527 or 627 to one or more corresponding conductors associated with the CAT cable configurations. The configuration may enable at least a portion of the one or more switching devices and disable other portions of the switching devices. The single network interface 427, 527 or 627 may handle processing of data rates ranging from 1 BaseT to multi-gigabit speeds. The CAT cable configurations may comprise CAT 3, CAT 4, CAT 5, CAT 5E, CAT 6, CAT 6A, CAT 7 and CAT 7A, for example. The connectors 429, 529, and/or 629 may comprise an RJ 45 connector.

Certain embodiments of the invention may comprise a machine-readable storage having stored thereon, a computer program having at least one code section for communicating information within a network, the at least one code section being executable by a machine for causing the machine to perform one or more of the steps described herein.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

## Claims

1. A method for interfacing devices to a network, the method comprising:
configuring a single network interface to handle processing of signals communicated over differently coupled CAT cable configurations.

2. The method according to claim 1, comprising electronically configuring one or more switching devices to couple said single network interface to one or more corresponding conductors associated with said CAT cable configurations.

3. The method according to claim 2, wherein said one or more switching devices comprises one or more multiplexers.

4. The method according to claim 2, comprising enabling at least a portion of one or more switching devices during said configuring.

5. The method according to claim 2, comprising disabling at least a portion of one or more switching devices during said configuring.

6. A system for interfacing devices to a network, the system comprising:
one or more circuits for configuring a single network interface to handle processing of signals communicated over differently coupled CAT cable configurations.

7. The system according to claim 6, wherein said one or more circuits electronically configures one or more switching devices to couple said single network interface to one or more corresponding conductors associated with said CAT cable configurations

8. The system according to claim 7, wherein said one or more switching devices comprises one or more multiplexers.

9. A method for interfacing a device to a network, the method comprising configuring a single connector to accept a plurality of different category (CAT) wiring types to handle a plurality of data rates.

10. The method according to claim 9, wherein said single connector is an RJ45 connector.
